# EUROPÄISCHE PATENTSCHRIFT

(11) **EP 3 074 225 B1**
(45) Veröffentlichungstag und Bekanntmachung des Hinweises auf die Patenterteilung: **21.12.2022**
(21) Anmeldenummer: 14718504.5
(22) Anmeldetag: 27.03.2014
(51) Int. Cl.: B32B 21/04, B32B 21/13, B32B 21/14, B32B 37/06, B32B 37/10, E04F 15/02

(54) **FUSSBODEN-, WAND- ODER DECKENPANEEL UND VERFAHREN ZU DESSEN HERSTELLUNG**
FLOOR, WALL, OR CEILING PANEL AND METHOD FOR PRODUCING SAME
PANNEAU DE REVÊTEMENT DE SOL, DE MUR OU DE PLAFOND ET PROCÉDÉ DE PRODUCTION

(30) Priorität: 27.11.2013 DE 102013113125
(43) Veröffentlichungstag der Anmeldung: 05.10.2016
(73) Patentinhaber: Välinge Innovation AB, 263 64 Viken (SE)
(72) Erfinder: SCHULTE, Guido, 59602 Rüthen-Meiste (DE)
(74) Vertreter: Välinge Innovation AB
(86) Internationale Anmeldenummer: PCT/DE2014/100106
(87) Internationale Veröffentlichungsnummer: WO 2015/078434

(56) Entgegenhaltungen:
- WO-A1-2009/015682
- DE-A1- 10 245 914
- US-A1- 2005 136 234
- US-A1- 2006 070 325

## Beschreibung

Die Erfindung betrifft ein Fußboden-, Wand- oder Deckenpaneel, welches eine Trägerplatte und ein oberseitiges Furnier aufweist, sowie ein Verfahren zur Herstellung eines solchen Fußboden-, Wand- oder Deckenpaneels.

Paneele mit einer Nutzschicht bzw. Decklage aus Echtholz kommen insbesondere als Echtholzböden oder Parkettböden zum Einsatz. Solche Fußböden verbreiten ein natürliches Wohnklima. Sie sind angenehm fußwarm und gleichen Feuchtigkeitsschwankungen in der Raumluft aus, wodurch sie zu einem wohngesunden Raumklima beitragen. Auch als Wand- oder Deckenverkleidung sind solche Furnier- bzw. Holzpaneele sehr beliebt.

Ein Verfahren zur Herstellung von Parkett- oder Furnierfußbodenplatten mit einer Decklage aus Echtholz ist in der DE 102 45 914 A1 beschrieben. Dort wird eine Decklage aus Echtholz einer Imprägnierung mit duroplastischen Kunstharzen unterworfen. Nach der Imprägnierung wird die Decklage auf die Trägerplatte geklebt. Ferner wird die Decklage bedruckt.

Gängig sind Fußbodenpaneele mit einem Dreischichtaufbau und profilierten Fügeflächen an den Seitenrändern zur Ausbildung von Verbindungsmitteln in Form von Nut und Feder oder einem sogenannten Klicksystem. Die Verbindungsmittel ermöglichen eine mechanische Koppelung der einzelnen Paneele untereinander innerhalb eines Bodenbelags oder einer Wand- bzw. Deckenverkleidung. Die Trägerplatte besteht üblicherweise aus einem Holzwerkstoff, insbesondere einer hoch verdichteten Faserplatte (HDF). Die oberseitige Deckschicht aus Echtholz kann unterschiedlich stark sein. Bei einer Dicke der Deckschicht aus Holz von mehr als 2,5 mm spricht man von einem Parkettfußboden. Nach einer üblichen fachterminologischen Einteilung beginnen Furniere für Deckschichten von Fußbodenpaneelen bei etwa 0,4 mm. Grundsätzlich werden Fußbodenpaneele mit Holzdeckschichten von kleiner als 2,5 mm als Echtholz- oder Furnierboden bezeichnet.

Nach dem Aufkleben des Furniers werden Fehlstellen in der Oberfläche, beispielsweise Astlöcher, Spalten oder Risse, ausgespachtelt. Üblicherweise spachtelt man mit einem Überschuss an Spachtelmasse, der dann später wieder abgetragen wird. Dies erfolgt üblicherweise durch schleifen oder bürsten. Dies birgt insbesondere bei dünnen Furnierschichten die Gefahr, dass die Schicht durch die nachträgliche mechanische Bearbeitung beschädigt wird. Aus diesem Grund setzt man daher häufig von vornherein dickere Furniere ein oder man sortiert mit Fehlstellen behaftete Furniere von vornherein aus. Dies ist jedoch unökonomisch und führt zudem dazu, dass die Varianzbreite des optischen Erscheinungsbildes der Naturholzböden geschmälert wird.

Bekannt ist auch ein sogenanntes Echtholzlaminat. Dort wird auf die Deckschicht aus Furnier ein Overlay aufgetragen, beispielsweise in Form eines Melaminpapiers oder -films. Anschließend wird dieses Sandwich verpresst. Nachteilig hieran ist, dass die bei diesem Produkt im Furnier natürlich vorhandenen Fehlstellen wie Spalten, Risse, Äste oder Poren oft milchig in der Optik erscheinen. Ursächlich hierfür ist der fehlende bzw. ungenügende Pressdruck beim Pressvorgang, weil im Bereich der Fehlstellen der Gegendruck fehlt. Arbeitet man hingegen mit höherem Pressdruck, dominiert die Struktur des Pressbleches die Holzoberfläche und die natürliche Holzstruktur bzw. -optik leidet.

Im Umfang der US 2006/070325 A1 wird ein Fußbodenpaneel offenbart, enthaltend eine erste Schicht aus beispielsweise hoch- oder mittelverdichtetem Holzfaserwerkstoff und eine zweite Schicht aus einem Hartholzfurnier. Auf die erste Schicht wird ein Klebstoff aufgetragen, welcher in die obere Schicht eindringt. Als Klebstoff wird ein Harnstoff-Formaldehyd eingesetzt. Zur Herstellung des Fußbodenpaneels werden die Schichten unter Druck und erhöhter Temperatur miteinander verpresst.

Durch die US 2005/136234 A1 zählt ein verklebtes Paneel aus einer hoch- oder mittelverdichteten Trägerplatte mit einer Hartholzschicht zum Stand der Technik. Zum Verkleben der Schichten wird ein Polyurethan-Klebstoff verwendet. Auch hierbei erfolgt ein Verpressen der Schichten bei erhöhtem Druck und erhöhter Temperatur.

Zum technologischen Hintergrund gehört ferner die WO 2009/015682 A1, welche ein Fußbodenpaneel aus einer Trägerplatte und einer Schicht aus einer harzimprägnierten Schicht, vorzugsweise aus Papier, offenbart. Verwendet werden hierbei Harnstoffharze. Die Verbindung der Schichten erfolgt mittels einer Druck- und/oder Hitzeverpressung.

Des Weiteren beschreibt die DE 10 2006 058 244 A1 eine furnierte Platte, ein Verfahren zur Herstellung einer furnierten Platte und die Verwendung von Ausschusspapieren bei diesem Verfahren. Die furnierte Platte weist eine Trägerplatte auf, welche an wenigstens einer ihrer Oberflächen mit einem Furnier verklebt ist. Die Verklebung erfolgt mittels eines mit Harz getränkten Papiers.

Plattenförmige Bauelemente und deren Herstellung gehen auch aus der DE 103 00 247 A1 oder der EP 1 657 055 A1 hervor.

Der Erfindung liegt ausgehend vom Stand der Technik die Aufgabe zugrunde, ein Fußboden-, Wand- oder Deckenpaneel zu schaffen, welches bei kostengünstiger Fertigung qualitativ hochwertig ist und eine verbesserte natürliche Optik besitzt, sowie ein Verfahren zur Herstellung eines solchen Fußboden-, Wand- oder Deckenpaneels aufzuzeigen.

Der gegenständliche Teil der Aufgabe wird durch ein Fußboden-, Wand- oder Deckenpaneel gemäß Patentanspruch 1 gelöst. Die Lösung des verfahrensmäßigen Teils der Aufgabe zeigt Anspruch 7 auf.

Vorteilhafte Ausgestaltungen, Weiterbildungen und Aspekte der Erfindung sind Gegenstand der abhängigen Ansprüche 2 bis 6 bzw. 8 bis 14.

Die vorliegende Erfindung bezieht sich insbesondere auf Echtholz- oder Furnierfußbodenpaneele mit einem Furnier aus Holz und einer Dicke des Furniers von kleiner als 2,5 mm, insbesondere mit einer Dicke zwischen 0,6 mm und 1,2 mm. Ebenso kann es sich bei dem Furnier um ein Korkfurnier, insbesondere ein Korkeichenfurnier, handeln.

Die Trägerplatte ist ein Plattenmaterial aus einem Holzwerkstoff, wie beispielsweise Massivholz, Spanholz, Holzfaserwerkstoff, MDF (Medium Density Fiber Board) oder HDF (High Density Fiber Board). Bevorzugt kommt im Rahmen der Erfindung eine Trägerplatte aus HDF zum Einsatz. Ausgangsprodukt bei der Fertigung von erfindungsgemäßen Fußboden-, Wand- oder Deckenpaneelen ist eine großflächige Trägerplatte, vorliegend als Basisträgerplatte bezeichnet. Eine solche großflächige bzw. großformatige Trägerplatte bzw. Basisträgerplatte ist rechteckig konfiguriert und hat eine Größe von 2.000 mm bis 5.600 mm in der Länge und 1.200 mm bis 2.100 mm in der Breite. Üblicherweise besitzt die Trägerplatte bzw. die Basisträgerplatte eine Dicke von 5 mm bis 12 mm. Denkbar sind auch wasserfeste Materialien, zum Beispiel auf Basis mineralischer Werkstoffe, wie Faser-Zement, Sand-Bindegemische oder Holz-Kunststoff-Verbundwerkstoffe (Wood-Plastic-Composites WPC) sowie Holzfaser-Polymer-Verbundwerkstoffe oder auch die Verwendung von Magnesitplatten. Ein Aspekt zielt hier auf die Verwendung von naturfaserverstärktem Kunststoff als Werkstoff für die Trägerplatte bzw. die Basisträgerplatte ab. Neben Holzfasern können hier auch andere Pflanzenfasern, wie Jute oder Flachs, verwendet werden, insbesondere in einem Holzfaser- oder Holzmehlanteil von 50% bis 90% und einem Kunststoffmatrix aus Polypropylen (PP). Ferner kann ein Holz-Kunststoff-Verbundwerkstoff auf Basis von thermoplastisch verarbeitbaren Duroplasten, wie modifiziertes Melaminharz mit Naturfaser- bzw. Naturmehlanteil, Verwendung finden. In diesem Zusammenhang bietet auch Bamboo Plastic Composites (BPC) interessante praktische Ansätze. Bei diesem Werkstoff kommen Bambusfasern bzw. Bambusmehl als Naturwerkstoff zum Einsatz.

Wie bereits erwähnt, können auch Platten auf Basis zementhaltiger Bindemittel bzw. Faserzementplatten als Trägerplatte Verwendung finden. Ebenso wie Magnesitplatten. Magnesitplatten bestehen aus einem Gemisch von Magnesiumoxyd, Kalziumcarbonat, Silikaten sowie Fasern, insbesondere Holz- und/oder Glasfasern. Ein Vorteil von Magnesitplatten ist das geringe Gewicht und das geringe Wärmeleitungsvermögen, ebenso wie ihre Feuerfestigkeit. Magnesitplatten werden als nichtbrennbar eingestuft.

Kernpunkt der Erfindung ist, dass zwischen der Trägerplatte und dem Furnier eine Harzschicht vorgesehen ist und die Trägerplatte, die Harzschicht und das Furnier miteinander verpresst und miteinander verbunden sind. Das Furnier ist vom Harz der Harzschicht durchdrungen bzw. infiltriert. Das Verpressen erfolgt heiß bei einer Temperatur, die im Wesentlichen abhängig ist vom Harzwerkstoff.

Vorzugsweise erfolgt das Verpressen bei einer Temperatur von mehr als 100 °C, vorzugsweise bei einer Temperatur zwischen 100 °C und 140 °C. Die Presstemperatur bezieht sich auf die Temperatur am Pressblech der Presse. Diese Temperatur steht auch an den Kontaktflächen des Pressblechs mit der Oberseite des Furniers bzw. der Unterseite der Trägerplatte an. Bei duroplastischen Harzen oder Reaktivharzen sind höhere Temperaturen erforderlich. Insbesondere erfolgt das Verpressen bei einer Temperatur zwischen 180 °C und 210 °C.

Bei Harzen in Form von Harnstoff-Formaldehyd-Kondensationsprodukten liegen die Presstemperaturen niedriger, insbesondere in einem Bereich zwischen 100 °C und 140 °C. Bei diesen Harzwerkstoffen können auch bereits Presstemperaturen von 80 °C und höher ausreichen.

Die Harzschicht besteht aus Harz. Hierbei handelt es sich insbesondere um ein Polyvinylacetat (Kurzzeichen PVAc), also einem thermoplastischen Kunststoff. Besonders bevorzugt handelt es sich bei der Harzschicht um ein Polymerharz, insbesondere um ein Harnstoff-Formaldehyd-Kondensationsprodukt, wie es von der Firma BASF unter der Handelsbezeichnung und registrierten Marke "KAURIT" vertrieben wird. Vorzugsweise kommt ein pulverförmiges konfektioniertes Harnstoff-Formaldehyd-Kondensationsprodukt zur Anwendung. Ferner kann es sich bei dem Harz der Harzschicht um ein duroplastisches Kunstharz handeln. Es können farbige oder transparente Harze oder farbige Harnstoffharze, farbige Harnstoff-Melamine oder farbige Melamin-Polyurethan-Harz-Gemische oder farbige Polymer-Harze zur Anwendung gelangen. Ein Aspekt der Erfindung zielt darauf ab, dass Harze zum Einsatz kommen, die unter Hitze aushärten bzw. reagieren. In diesem Zusammenhang bietet sich die Verwendung von aminoplastischen, duroplastischen oder Reaktivharzen, wie Polyurethan (PUR) oder thermoplastisches Polyurethan, an. Das Harz bzw. die Harzschicht wird bevorzugt als Harzfilm vorliegen bzw. ausgebildet sein.

Ein wesentlicher Aspekt der Erfindung wird in der Verwendung von Kauritharzen, insbesondere Kauritleimen, gesehen. Besonders geeignet sind Kauritpulverleime, die mit Wasser und Härter vermischt werden. Dies führt zu einer besonders effektiven Penetration der Poren im Furnier. Das Harz sorgt für eine gute Penetration in die Furnierschicht. In diesem Zusammenhang ist ein Einfärben des Kauritleimes, beispielsweise mit schwarzen oder braunen Farbstoffen, vorteilhaft, um den ansonsten farblosen Kauritleim als Kontrast sichtbar werden zu lassen. Zur Optimierung werden dem Harzgemisch Füllstoffe zugesetzt, beispielsweise in Form von Holzfasern, Holzspänen, Zellulosefasern, Korkmehlen, Gesteinsmehlen und weiteren bzw. ähnlichen natürlichen Füllstoffen.

Die Harzschicht kann als Pulver oder als flüssiger, insbesondere hochpastöser Film aufgetragen werden. Zum Auftrag auf die Basisträgerplatte wird eine wässrige Harzlösung hergestellt. Ein vorteilhaftes Mischungsverhältnis besteht aus zwei Gewichtsteilen Harzpulver und einem Gewichtsteil Wasser.

Vorzugsweise ist die Harzschicht eingefärbt, insbesondere schwarz oder braun eingefärbt. Dies erfolgt insbesondere durch Zugabe von Farb- bzw. Färbestoffen, beispielsweise Farbpigmenten, zum Harzpulver.

Eine weitere Optimierung von Harzpulvergemischen oder Harzgemischen erfolgt durch Zugabe von Füllstoffen, insbesondere Holzfasern, Holzspäne, Zellulosefasern, Korkmehl oder Gesteinsmehle und ähnliches, insbesondere natürliche Additive.

Zur Fertigung eines erfindungsgemäßen Fußboden-, Wand- oder Deckenpaneels werden eine großflächige bzw. großformatige Basisträgerplatte sowie ein Furnier als Blattware in bedarfsgerechter Größe bereitgestellt. Dabei werden die Furniere als Streifen oder als zusammengesetztes (verklebt oder vernäht) Furnier oder als breites, auf das Format der Basisträgerplatte abgestimmtes Schälfurnier aufgelegt. Es wird ein Mehrschichtkörper gebildet, umfassend die Basisträgerplatte und das Furnier. Zwischen der Basisplatte und dem Furnier wird eine Harzschicht eingegliedert. Unterseitig der Trägerplatte wird eine Gegenzuglage angeordnet. Der so gebildete Mehrschichtkörper wird anschließend in einer Presse verpresst, so dass Basisträgerplatte, Harzschicht, Furnier und Gegenzuglage verbunden werden. Das Verpressen des Mehrschichtkörpers erfolgt in einer Presse, und zwar bei einem produkttechnisch abgestimmten Pressdruck.

Bei der Verwendung einer Harzschicht aus aminoplastischen, duroplastischen oder Reaktivharzen, wie Polyurethan (PUR) oder thermoplastischen Polyurethan, wird ein Pressdruck von größer oder gleich (≥) 1000 Kilopascal (kPa) als geeignet angesehen. Vorzugsweise liegt der Pressdruck oberhalb von 3500 Kilopascal (kPa). Die Presstemperatur hierbei ist größer oder gleich (≥) 120 °C. Vorzugsweise liegt die Presstemperatur zwischen 180 °C und 210 °C. Besteht die Harzschicht aus einem Polymerharz, insbesondere einem Harnstoff-Formaldehyd-Kondensationsprodukt, erfolgt das Verpressen bei einem Pressdruck von größer oder gleich (≥) 100 Kilopascal (kPa). Das Verpressen erfolgt hierbei bei einer Presstemperatur, die vorzugsweise zwischen 100 °C und 140 °C liegt.

Die Presstemperatur bezieht sich auf die Temperatur am Pressblech der Presse. Im Rahmen des erfindungsgemäßen Verfahrens liegt die Presszeit, bei der der Mehrschichtkörper in der Presse mit Druck beaufschlagt wird, zwischen 10 Sekunden und 60 Sekunden. Bei Harzschichten auf Basis von Polymerharzen beträgt die Presszeit vorzugsweise zwischen 20 Sekunden und 25 Sekunden.

Beim Pressvorgang kann die Oberfläche der Furniere durch ein Strukturblech oder einen Strukturgeber eine Struktur, ein Muster oder Ornamente erhalten. Die Struktur kann im Glanzgrad in Teilbereichen variieren. Weiterhin sind verschiedene Strukturtiefen möglich. Die Strukturtiefe kann bis 0,6 mm betragen. Bezogen auf die Furnierstärke kann die Struktur eine Strukturtiefe von 2/3 der Furnierstärke besitzen.

Nach dem Pressvorgang wird der verpresste Mehrschichtkörper in einzelne Paneele geteilt. Die einzelnen Paneele werden in einem nachfolgenden Arbeitsschritt an ihren Seitenrändern profiliert. Das Profilieren erfolgt erst nach Abkühlung der Trägerplatte auf Raumtemperatur. Das Profilieren dient insbesondere zur Ausbildung von Verbindungsmitteln an den Längs- und Schmalseiten der Paneele.

Das Aufteilen des verpressten Mehrschichtkörpers erfolgt üblicherweise nach dem Abkühlen. Hierzu kann der Mehrschichtkörper über eine Kühlstrecke geführt oder zum Abkühlen zwischengelagert werden.

Als Presse kommt insbesondere eine Kurztakt-Presse zum Einsatz oder auch eine kontinuierliche Presse. Beim Heißpressvorgang bzw. Pressvorgang unter Temperatureinfluss wird die Harzschicht plastifiziert und penetriert in das Furnier. Ein wesentlicher Aspekt der Erfindung besteht darin, dass das Harz der Harzschicht das Furnier bis zur Oberseite des Holzfurniers durchdringt. Hierbei werden im Furnier vorhandene Poren, Risse, Spalten und/oder sonstige Fehlstellen beim Pressvorgang mit Harz verfüllt. Das Harz der Harzschicht bildet eine unlösbare Verbindung zwischen dem Furnier und der Trägerplatte. Ein besonderer Vorteil der Erfindung besteht folglich darin, dass zwei Fertigungsschritte, nämlich Kleben und Spachteln des Furniers, gemeinsam in einem Arbeitsvorgang durchgeführt werden.

Insbesondere wird das Verpressen des Mehrschichtkörpers so ausgeführt, dass das Furnier mit Harz durchtränkt und nach dem Verpressen Harz an der Oberfläche des Furniers sichtbar ist. In diesem Zusammenhang kommen insbesondere auf die Farbe des Furniers farblich abgestimmte Harze zur Anwendung. Produkttechnisch wird ein schwarzes Harz als universell und vorteilhaft angesehen. Zweckmäßigerweise wird das Verpressen so ausgeführt, dass die Oberfläche des Furniers und damit des Paneels nur mit sehr wenig Harz oder gar keinem Harz behaftet ist. Poren, Risse, Spalten oder sonstige Fehlstellen sind sichtbar ausgefüllt. Es tritt jedoch kein oder zumindest nur sehr wenig überschüssiges Harz an der Oberfläche aus. Das verpresste Produkt braucht dann nur noch strukturgebürstet werden und erhält gegebenenfalls eine Oberflächenbeölung oder -lackierung.

Eine Alternative sieht vor, die Harzschicht durch einen oberseitig auf die Trägerplatte aufgebrachten Harzfilm zu bilden. Hierbei wird Harz flüssig auf die Trägerplatte aufgetragen. Er kann danach angetrocknet bzw. vorkondensiert werden. Der Harzfilm haftet auf der Trägerplatte als gel- bzw. wachsartige Schicht.

Weiterhin kann die Harzschicht auch unterseitig auf dem Furnier in Form eines Harzfilms ausgebildet sein. Auch hierbei wird Harz flüssig auf eine Seite des Furniers aufgetragen. Hierdurch wird das Furnier mit Harz imprägniert. Das flüssig aufgetragene Harz wird angetrocknet und vorkondensiert. Das so imprägnierte und mit der Harzschicht versehene Furnier wird nach dem Herstellen der Harzschicht der Weiterverwendung zugeführt. Vor der Bildung des Mehrschichtkörpers wird das Furnier gedreht, so dass die Harzschicht unterseitig des Furniers ist und mit der Oberseite der Basisträgerplatte in Kontakt gelangt.

Ein Harzfilm kann auch durch einen Auftrag von Harz in Pulverform auf die Oberfläche der Trägerplatte oder auf das Furnier gebildet sein. Das pulverförmige Harz wird dann unter Temperatureinfluss angeliert, so dass sich der Harzfilm ausbildet.

Generell kann das Harz auch pastös, also in Form einer Paste, vorliegen und verarbeitet werden.

Die Menge an Harz ist so dosiert, dass sie das Furnier infiltriert bzw. durchschlägt, jedoch durch die zugefahrene Presse nicht auf die Oberfläche des Furniers austreten kann. Poren, Fehlstellen, Risse oder Spalten im Furnier sind mit Harz verpresst und ausgefüllt. Die natürliche Holzoberfläche oder Korkoberfläche und -struktur bleibt erhalten. Das Harz kann mit einem Füllstoff angedickt sein. Hierdurch ist mehr Masse vorhanden, um Poren, Risse, Spalten und/oder Fehlstellen auszufüllen. Als Füllstoff können organische oder anorganische Materialien zum Einsatz gelangen, insbesondere mineralische Pigmente, Steinmehl oder Kreide, ebenso wie Holzpuder oder Holzmehl.

Die Gegenzuglage gleicht Spannungen im Mehrschichtkörper aus. Bei der Gegenzuglage kann es sich um ein Furnier, ein Papier, eine Folie oder auch einen Film, insbesondere einen Kunstharzfilm, handeln. Zweckmäßigerweise ist ein Gegenzugfurnier oder ein Gegenzugpapier ebenfalls beharzt bzw. mit Kunstharz imprägniert. Die Gegenzuglage wird bei der Herstellung des erfindungsgemäßen Fußboden-, Wand- oder Deckenpaneels gemeinsam mit der Basisträgerplatte, dem Furnier und der Harzschicht verpresst und unterseitig mit der Basisträgerplatte verbunden.

Die Paneele sind an ihren Seitenrändern profiliert und mit Verbindungsmitteln versehen. Verbindungsmittel können als Nut und Federn ausgestaltet sein. Vorzugsweise sind die Seitenränder mit einer Klickverbindung versehen. Weiterhin können die Paneele an ihren oberseitigen Rändern umlaufend mit einer Fase versehen sein. Bei einem Paneel mit Fase wirkt sich die Harzzwischenschicht sehr positiv bezüglich der Feuchtigkeitsabdichtung im verlegten Produkt aus.

Eine farbliche Gestaltung der Paneele ist weiterhin möglich, wenn an den Seitenrändern das Harz sichtbar bleibt. Insbesondere erfolgt dies durch ein farbiges Harz, welches farblich auf das Furnier abgestimmt ist. Hierbei können einzelne oder alle Seitenränder mit einem optisch sichtbaren Randstreifen aus Harz ausgebildet sein. Eine Varianz in der optischen Gestaltung einer Paneele ergibt sich, wenn ein Harz verwendet wird, welches farblich im Kontrast zur Farbe des Furniers steht. Hierdurch kann beispielsweise eine Fugenoptik gezielt erzeugt werden. Durch das Zusammenspiel von Harz und Furnier ist eine optische Akzentuierung der Oberfläche eines erfindungsgemäßen Fußboden-, Wand- oder Deckenpaneels möglich. Hierfür können im Harz auch Effektmaterialien, wie Pigmente und andere Füllstoffe, beispielsweise Glimmer, eingesetzt werden.

Ein Aspekt besteht weiterhin darin, die Fase als dekorative, optisch abgrenzende Kante auszubilden. Weiterhin kann das Furnier mit einem Dekor bedruckt sein. Vorzugsweise erfolgt das Bedrucken mittels Digitaldruck. Hierbei kommt ein auf die verwendeten Harze abgestimmtes System von Drucktinten zur Anwendung. Möglich ist es, auf das Furnier eine Versiegelung aufzutragen. Als Versiegelung wird der Auftrag einer Farbe, einer Beize, eines Öls oder auch eines Lacks bzw. Lacksystemen verstanden.

Das Paneel bzw. die Oberfläche des Furniers wird nach dem Verpressen einer mechanischen Oberflächenbearbeitung unterzogen. Im Rahmen einer Oberflächenbearbeitung erfolgt insbesondere ein Schleifen oder ein Bürsten der Oberfläche. Hierdurch kann die natürliche Optik der Oberfläche akzentuiert werden. Durch eine unregelmäßige Oberflächenbearbeitung kann eine gealterte Struktur bzw. Optik, eine sogenannte Vintage Optik, erzielt werden. Die Oberfläche des Paneels kann so beispielsweise eine sägeraue Oberfläche besitzen oder Rattermarken bzw. Schleiffehler oder ähnliches aufweisen.

Ein weiterer Aspekt der Erfindung sieht vor, dass beim Verpressen eine Struktur in das Furnier, insbesondere in die Oberfläche des Furniers, eingeprägt wird. Auch dies trägt zu einer besonders eleganten und dekorativen Oberfläche bei. Weiterhin unterstützt der Prägevorgang die Penetration des Harzwerkstoffes in das Furnier vorteilhaft.

Ein erfindungsgemäßes Fußboden-, Wand- oder Deckenpaneel ist kostengünstig in der Fertigung und qualitativ hochwertig. Die Paneele bestechen durch ihre natürliche Holzoptik bzw. Korkoptik mit einem rustikalen Charakter infolge der optisch wahrnehmbaren, verfüllten Risse, Spalten und/oder Astlöcher. Da das Furnier, also die oberseitige Nutz- bzw. Decklage des Paneels, mit Harz durchtränkt bzw. imprägniert ist, wird zudem die Widerstandsfähigkeit, insbesondere die Eindruckbeständigkeit und die Durchriebbeständigkeit, erhöht. Durch die hohe Widerstandsfähigkeit ist eine mechanische Bearbeitung des Furniers, wie durch schleifen oder bürsten, möglich und zwar bei verringerter Gefahr, dass die Optik durch die mechanische Bearbeitungsvorgänge zerstört wird. Das Paneel ist deutlich widerstandsfähiger. Die Erfindung ermöglicht in vorteilhafter Weise auch den Einsatz von weicheren Holzarten bzw. Furniere aus weicheren Hölzern, wie Lärche. Durch die Harzimprägnierung bzw. -durchtränkung wird ein Furnier aus einem weichen Holz in der Härte erhöht und widerstandsfähiger.

Im Rahmen der Erfindung können auch vorteilhaft gedämpfte oder geräucherte Furniere verwendet werden. Besonders geeignet sind ferner Furniere aus grobporigen Hölzern, wie Eiche, Esche, Lärche oder Fichte. Diese werden durch die erfindungsgemäße Harzinfiltrierung in der Qualität verbessert und optisch akzentuiert.

## Patentansprüche

1. Fußboden-, Wand- oder Deckenpaneel, welches eine Trägerplatte und ein oberseitiges Furnier aufweist, wobei zwischen der Trägerplatte und dem Furnier eine Harzschicht vorgesehen ist und die Trägerplatte, die Harzschicht und das Furnier miteinander verpresst sind, **dadurch gekennzeichnet, dass** die Harzschicht auf Basis von Harzpulver gebildet ist und dem Harzpulver Farbstoffe und/oder Bindemittel und/oder Härter und/oder Füllstoffe, insbesondere holzbasierende Füllstoffe, zugemischt ist und das Harz der Harzschicht das Furnier penetriert, wobei das Harz der Harzschicht das Furnier bis zur Oberseite des Furniers durchdringt und hierbei Poren, Risse und Spalten im Furnier mit Harz verfüllt werden.

2. Fußboden-, Wand- oder Deckenpaneel nach Anspruch 1, **dadurch gekennzeichnet, dass** die Harzschicht durch einen oberseitig auf die Trägerplatte aufgetragenen Harzfilm gebildet ist.

3. Fußboden-, Wand- oder Deckenpaneel nach Anspruch 1, **dadurch gekennzeichnet, dass** die Harzschicht durch einen unterseitig auf das Furnier aufgetragenen Harzfilm gebildet ist.

4. Fußboden-, Wand- oder Deckenpaneel nach wenigstens einem der Ansprüche 1 bis 3, **dadurch gekennzeichnet, dass** unterseitig der Trägerplatte eine Gegenzuglage vorgesehen ist.

5. Fußboden-, Wand- oder Deckenpaneel nach wenigstens einem der Ansprüche 1 bis 4, **dadurch gekennzeichnet, dass** die Oberseite des Furniers geschliffen, gebürstet und/oder versiegelt ist.

6. Fußboden-, Wand- oder Deckenpaneel nach wenigstens einem der Ansprüche 1 bis 5, **dadurch gekennzeichnet, dass** in die Oberseite des Furniers eine Struktur eingeprägt ist.

7. Verfahren zur Herstellung eines Fußboden-, Wand- oder Deckenpaneels, welches eine Trägerplatte und ein oberseitiges Furnier aufweist, **gekennzeichnet durch** folgende Schritte:
- Bereitstellen einer großflächigen Basisträgerplatte;
- Bereitstellen eines Furniers;
- Bildung eines Mehrschichtkörpers bestehend aus der Basisträgerplatte, dem Furnier und einer zwischen der Basisträgerplatte und dem Furnier eingegliederten Harzschicht sowie einer unterseitig der Basisträgerplatte angeordneten Gegenzuglage;
- Verbinden von Basisträgerplatte, Harzschicht und Furnier sowie Gegenzuglage durch Verpressen des Mehrschichtkörpers in einer Presse, wobei der Pressdruck, die Presstemperatur und die Presszeit so abgestimmt sind, dass bei einem Verpressen des Mehrschichtkörpers Poren, Risse und Spalte im Furnier mit Harz verfüllt werden, wobei der Pressdruck oberhalb von 3500 kPa, die Presstemperatur zwischen 180 °C und 210 °C und die Presszeit zwischen 10 Sekunden und 60 Sekunden liegen;
- anschließend der verpresste Mehrschichtkörper in einzelne Paneele geteilt wird und
- die Paneele an ihren Seitenrändern profiliert und mit Verbindungsmitteln versehen werden,
wobei das Verpressen des Mehrschichtkörpers so ausgeführt wird, dass das Furnier mit Harz durchtränkt und nach dem Verpressen Harz an der Oberfläche des Furniers sichtbar wird, und
wobei die Harzschicht in Pulverform aufgetragen wird, wobei dem Pulver Härte- und/oder Bindemittel und/oder ein Farbstoff und/oder Füllstoffe zugemischt sind.

8. Verfahren nach Anspruch 7, **dadurch gekennzeichnet, dass** die Harzschicht durch ein Polymerharz oder ein Harnstoff-Formaldehyd-Kondensationsprodukt gebildet wird.

9. Verfahren nach Anspruch 7 oder 8, **dadurch gekennzeichnet, dass** die Harzschicht durch einen oberseitig auf die Basisträgerplatte aufgetragenen Harzfilm gebildet wird.

10. Verfahren nach Anspruch 7 oder 8, **dadurch gekennzeichnet, dass** die Harzschicht durch einen unterseitig auf das Furnier aufgetragenen Harzfilm gebildet wird.

11. Verfahren nach wenigstens einem der Ansprüche 7 bis 10, **dadurch gekennzeichnet, dass** das Furnier mit einem Dekor bedruckt wird.

12. Verfahren nach wenigstens einem der Ansprüche 7 bis 11, **dadurch gekennzeichnet, dass** auf das Furnier eine Versiegelung aufgetragen wird.

13. Verfahren nach wenigstens einem der Ansprüche 7 bis 12, **dadurch gekennzeichnet, dass** das Furnier nach dem Verpressen einer mechanischen Oberflächenbearbeitung, insbesondere einem Schleifvorgang und/oder einem Bürstvorgang, unterzogen wird.

14. Verfahren nach wenigstens einem der Ansprüche 7 bis 13, **dadurch gekennzeichnet, dass** beim Verpressen eine Struktur in das Furnier eingeprägt wird.

## Claims

1. A floor, wall or ceiling panel, which has a carrier plate and an upper-side veneer, a resin layer being provided between the carrier plate and the veneer, and the carrier plate, the resin layer, and the veneer being pressed together, **characterized in that** the resin layer is formed on the basis of resin powder, and dyes and/or binders and/or curing agents and/or fillers, in particular wood-based fillers, are admixed to the resin powder, and the resin of the resin layer penetrates the veneer, wherein the resin of the resin layer passes through the veneer to the upper side of the veneer, and in the process pores, cracks and gaps in the veneer are filled with resin.

2. The floor, wall or ceiling panel according to claim 1, **characterized in that** the resin layer is formed by a resin film applied to the upper side of the carrier plate.

3. The floor, wall or ceiling panel according to claim 1, **characterized in that** the resin layer is formed by a resin film applied to the underside of the veneer.

4. The floor, wall or ceiling panel according to at least one of claims 1 through 3, **characterized in that** a compensation layer is provided on the underside of the carrier plate.

5. The floor, wall or ceiling panel according to at least one of claims 1 through 4, **characterized in that** the upper side of the veneer is polished, brushed and/or sealed.

6. The floor, wall or ceiling panel according to at least one of claims 1 through 5, **characterized in that** a structure is embossed in the upper side of the veneer.

7. A method for producing a floor, wall or ceiling panel,
which has a carrier plate and an upper-side veneer, **characterized by** the following steps:
- providing a base carrier plate having a large area;
- providing a veneer;
- forming a multi-layered body consisting of the base carrier plate, the veneer, and a resin layer incorporated between the base carrier plate and the veneer, and a compensation layer arranged on the underside of the base carrier plate;
- joining the base carrier plate, resin layer and veneer as well as the compensation layer by pressing the multi-layer body in a press, wherein the pressing pressure, the pressing temperature and the pressing time are adjusted such that, when the multi-layered body is pressed, pores, cracks and gaps in the veneer are filled with resin, wherein the pressing pressure is above 3500 kPa, the pressing temperature is between 180°C and 210°C, and the pressing time is between 10 seconds and 60 seconds;
- the pressed multi-layered body is then divided into individual panels, and
- the panels are profiled on their side edges and are provided with connecting means,
wherein the pressing of the multi-layered body is carried out such that the veneer is impregnated with resin, and resin becomes visible on the surface of the veneer after the pressing, and
wherein the resin layer is applied in powder form, wherein curing agents and/or binders and/or a dye and/or fillers are admixed to the powder.

8. The method according to claim 7, **characterized in that** the resin layer is formed by a polymer resin or a urea-formaldehyde condensation product.

9. The method according to claim 7 or 8, **characterized in that** the resin layer is formed by a resin film applied to the upper side of the base carrier plate.

10. The method according to claim 7 or 8, **characterized in that** the resin layer is formed by a resin film applied to the underside of the veneer.

11. The method according to at least one of claims 7 through 10, **characterized in that** the veneer is printed with a decoration.

12. The method according to at least one of claims 7 through 11, **characterized in that** a seal is applied to the veneer.

13. The method according to at least one of claims 7 through 12, **characterized in that** the veneer is subjected to mechanical surface processing, in particular a polishing process and/or a brushing process, after pressing.

14. The method according to at least one of claims 7 through 13, **characterized in that** a structure is embossed into the veneer during pressing.

## Revendications

1. Panneau de sol, de mur ou de plafond, lequel présente une plaque de support et un placage sur la face supérieure, une couche de résine étant prévue entre la plaque de support et le placage et la plaque de support, la couche de résine et le placage étant pressés ensemble, **caractérisé en ce que** la couche de résine est formée sur la base de poudre de résine et des colorants et/ou des liants et/ou des durcisseurs et/ou des charges, en particulier des charges à base de bois, sont mélangés à la poudre de résine et la résine de la couche de résine pénètre le placage, la résine de la couche de résine pénétrant le placage jusqu'à la face supérieure du placage et des pores, des fissures et des fentes dans le placage étant ainsi remplis de résine.

2. Panneau de sol, de mur ou de plafond selon la revendication 1, **caractérisé en ce que** la couche de résine est formée par un film de résine appliqué sur la face supérieure de la plaque de support.

3. Panneau de sol, de mur ou de plafond selon la revendication 1, **caractérisé en ce que** la couche de résine est formée par un film de résine appliqué sur la face inférieure du placage.

4. Panneau de sol, de mur ou de plafond selon au moins une des revendications 1 à 3, **caractérisé en ce qu'**une couche de contre-traction est prévue sur la face inférieure de la plaque de support.

5. Panneau de sol, de mur ou de plafond selon au moins une des revendications 1 à 4, **caractérisé en ce que** la face supérieure du placage est poncée, brossée et/ou scellée.

6. Panneau de sol, de mur ou de plafond selon au moins une des revendications 1 à 5, **caractérisé en ce qu'**une structure est imprimée dans la face supérieure du placage.

7. Procédé pour la fabrication d'un panneau de sol, de mur ou de plafond, lequel présente une plaque de support et un placage sur la face supérieure, **caractérisé par** les étapes suivantes :
- fourniture d'une plaque de support de base de grande surface ;
- fourniture d'un placage ;
- formation d'un corps à couches multiples composé de la plaque de support de base, du placage et d'une couche de résine intégrée entre la plaque de support de base et le placage ainsi qu'une couche de contre-traction disposée sur la face inférieure de la plaque de support de base ;
- liaison de la plaque de support de base, de la couche de résine et du placage ainsi que de la couche de contre-traction par pressage du corps à couches multiples dans une presse, la pression de pressage, la température de pressage et le temps de pressage étant accordés de telle manière que, lors du pressage du corps à couches multiples, des pores, des fissures et des fentes dans le placage sont remplis de résine, la pression de pressage étant supérieure à 3 500 kPa, la température de pressage étant située entre 180 °C et 210 °C et le temps de pressage étant situé entre 10 secondes et 60 secondes ;
- ensuite le corps à couches multiples pressé est divisé en panneaux individuels et
- les panneaux sont profilés sur leurs bords latéraux et pourvus de moyens de liaison,
le pressage du corps à couches multiples étant effectué de telle façon que le placage est imprégné de résine et qu'après le pressage la résine devient visible sur la surface supérieure du placage et
la couche de résine étant appliquée sous forme de poudre, des durcisseurs et/ou des liants et/ou un colorant et/ou des charges étant mélangés à la poudre.

8. Procédé selon la revendication 7, **caractérisé en ce que** la couche de résine est formée par une résine polymère ou par un produit de condensation urée-formaldéhyde.

9. Procédé selon la revendication 7 ou 8, **caractérisé en ce que** la couche de résine est formée par un film de résine appliqué sur la face supérieure de la plaque de support de base.

10. Procédé selon la revendication 7 ou 8, **caractérisé en ce que** la couche de résine est formée par un film de résine appliqué sur la face inférieure du placage.

11. Procédé selon au moins une des revendications 7 à 10, **caractérisé en ce que** le placage est imprimé avec un décor.

12. Procédé selon au moins une des revendications 7 à 11, **caractérisé en ce qu'**un scellant est appliqué sur le placage.

13. Procédé selon au moins une des revendications 7 à 12, **caractérisé en ce que** le placage est soumis, après le pressage, à un traitement de surface mécanique, en particulier à un processus de meulage et/ou un processus de brossage.

14. Procédé selon au moins une des revendications 7 à 13, **caractérisé en ce qu'**une structure est imprimée dans le placage lors du pressage.
